# EUROPEAN PATENT APPLICATION

(11) **EP 4 321 566 A1**
(43) Date of publication of application: **14.02.2024**
(21) Application number: 22189685.5
(22) Date of filing: 10.08.2022
(51) Int. Cl.: C08J 11/12

(54) **PROCESS FOR THE DEPOLYMERIZATION OF MIXED AUTOMOTIVE PLASTICS**

(71) Applicant: Basell Poliolefine Italia S.r.l., 20121 Milano (IT)
(72) Inventor: MIHAN, Shahram, 65812 Bad Soden (DE); SCHIRMEISTER, Carl, 79211 Denzlingen (DE); LICHT, Erik Hans, 55128 Mainz (DE); HEES, Timo, 55116 Mainz (DE); Mannebach, Gerd, 56294 Münstermaifeld (DE); Fraaije, Volker, 60385 Frankfurt am Main (DE)
(74) Representative: LyondellBasell

(57) **Abstract**

A process for the recycling of automotive plastic waste comprising:
(i) sorting the automotive plastic waste (APW) to obtain a plastic waste fraction containing at least 60%wt, of a mixture of polyethylene (PE) and polypropylene (PP);
(ii) shredding and/or pelletizing said fraction obtaining a plastic feedstock having a bulk density higher than 100 g/l;
(iii) depolymerizing said feedstock at 300-500°C, in the optional presence of a catalyst, thereby obtaining a gaseous depolymerization products and
(iv) collecting said gaseous depolymerization product and separating it into a liquid and a gaseous stream.

## Description

### FIELD OF THE DISCLOSURE

This disclosure relates to the depolymerization of polymeric waste materials. More specifically, this disclosure relates to process for the depolymerization of mixed automotive plastic waste via thermocatalytic degradation.

### BACKGROUND OF THE DISCLOSURE

Mixed post-consumer plastic waste from automotive applications is generated globally in large quantities through repairs and during the recycling of end-of-life vehicles. Due to the variety of polymers used in cars and the use of numerous plastic/metal composites and plastic/inorganic fillers composites, purely mechanical reprocessing of these plastics is not possible or not practical with a justifiable expenditure of energy and labor.

End of use cars are shredded and sorted in scrap car recycling plants mainly to retain the metals back. As a further stream also a plastic waste fraction is obtained. Due to high contamination however, these automotive plastic waste streams are usually incinerated for energy recovery (quaternary recycling). It is also possible however, to process these wastes by chemical recycling (also called tertiary recycling) technologies and in particular via pyrolysis.

The pyrolysis of mixed and unsorted automotive plastic waste leads to contamination of the pyrolysis oil with heteroatoms and very high contents of halogens. Due to high content of these contaminants the corresponding pyrolytic oil is unsuitable both for fuel applications and for the use as a feedstock for steam crackers.

It is therefore felt the need of a method for converting mixed automotive plastic waste into liquid or gaseous pyrolytic products usable as a fuel or feedstock for crackers.

By developing a method for identifying and separating of the highly contaminated automotive plastic parts, a plastic waste fraction was generated from post-consumer mixed automotive waste having a polyolefinic content of >70 wt%. The pyrolysis oil quality obtained from this separated fraction was shown to have a low content of heteroatoms, halogens, and aromatic compounds

### SUMMARY OF THE DISCLOSURE

In one aspect, the present disclosure provides a process for the recycling of automotive plastic waste comprising:
(i) sorting the automotive plastic waste (APW) to obtain a plastic waste fraction containing at least 60%wt, of a mixture of polyethylene (PE) and polypropylene (PP);
(ii) shredding and/or pelletizing said fraction obtaining a plastic feedstock having a bulk density higher than 100 g/l;
(iii) depolymerizing said feedstock at 300-500°C in the optional presence of a catalyst thereby obtaining a gaseous depolymerization products and
(iv) collecting said gaseous depolymerization product and separating it into a liquid and a gaseous streams.

### DETAILED DESCRIPTION OF THE DISCLOSURE

In a preferred aspect of the present disclosure the sorting of the APW allows to obtain a fraction having a content of PE and PP higher than 70% and more preferably higher than 75%. In this respect, the term polyethylene include all members of the polyethylene family such as such as high-density polyethylene (HDPE), medium-density polyethylene (MDPE) linear low-density polyethylene (LLDPE), low-density polyethylene (LDPE), ultra-low density polyethylene (ULDPE) and also plastomers and elastomers made of ethylene with either butene-1, hexene-1 or octene-1 or combinations thereof as comonomer. Likewise, the term polypropylene (PP) includes propylene homopolymer, propylene copolymers with other alpha olefins and the so called heterophasic copolymers (HeCO) comprising a crystalline fraction of propylene homo or copolymer and an elastomeric amorphous fraction usually made of a propylene/ethylene copolymer.

The sorted fraction can also include the above mentioned PP and PE polymers filled with inorganic materials such as talc, silica, glass fibers or glass beads.

Preferably the amount of non-olefin polymers, meaning with this term polymers deriving from monomers comprising heteroatoms, is lower than 5%wt, preferably lower than 3%wt more preferably lower than 2%wt and especially totally absent. Examples of such non-olefin polymers are Polyamides (PA), polycarbonate (PC), polyethylene therephthalate (PET), acrylonitrile styrene acrylate (ASA) polyoxymethylene (POM), acrylonitrile butadiene styrene (ABS) and halogenated polymers

Also, in a very preferred embodiment metal rich parts are removed and therefore the cumulative amount of metals selected from iron, copper, aluminum, magnesium, chromium in the sorted feedstock fraction is lower than 1%wt, preferably from 0.1 to 0.7%wt, or totally absent.

The above described sorted fraction constitutes a feedstock suitable for recycling purposes and in particular suitable for use as feedstock for a depolymerization process.

### Sorting

A variety of techniques are known to separate materials in a polymeric waste stream. Moving beds, drums and screens, and air separators are used to differentiate materials by size, weight and density. Depending on the nature of the feedstock, the sorting technique can change and be either manual or automated. In particular, Automatic Separation Techniques of waste plastics comprise dry sorting technique, electrostatic sorting technique, mechanical sorting method (involves centrifugal force, specific gravity, elasticity, particle shape, selective shredding and mechanical properties) as well as wet sorting technique (e.g. sink/float sorting method) and chemical sorting methods.

When the APW feedstock originates from scrap of end of use cars ferrous metal parts and cables may be removed manually or via magnetic separators. Non-ferrous metal materials, such as aluminum, copper and zinc, can be separated via eddy current separators such as, for example, those commercially available based on eccentrically mounted pole system.

In the alternative, density based separation can be used isolating the metal fraction having density higher than 2.5 g/cm³. A plastic-rich fraction having density lower than 2.0 g/cm³ is therefore obtained. This fraction is subject to a further density separation step in order to isolate a polyolefin rich fraction having density lower than 1.06 g/cm³.

Repair shops offer an alternative source of APW. When dealing with APW from this source, sorting may be based on typical applications of specific polymers, density and polymer composites for specific components. As an example, colorless tanks (e.g. cooling water expansion tanks) with a density <1.0 g/cm³ can be assigned to the polyethylene fraction, while black fuel tanks and black fuel hose with a density <1.0 g/cm³ can be associated to the fraction of halogenated materials.

Typically, unpainted exterior parts (e.g. wheel house liners, wheel arch, and bumper guide rails) with a dimension along one axis of >10 cm and density <1.06 g/cm³ are made of, and therefore go to, PP talc and mineral filled fraction.

The unpainted exterior parts (e.g. wheel house liners, wheel arch, and bumper guide rails) with a dimension along one axis of>10 cm and density of 1.06-1.3 g/cm³ can be assigned according to the material stamp on the parts to the non polyolefin fraction comprising ASA, ABS, PC/ABS, POM fraction after a manual separation of polyamide parts, which are collected separately in the PA fraction.

Engine covers with a dimension along one axis of>10 cm and density of 1.06-1.3 g/cm³ are also preferably assigned to PA fraction.

### Feedstock treatment

The sorted APW is treated in a way to uniform its particle size by shredding and/or pelletizing and bring the bulk density to a value higher than 100 g/cm³, preferably higher than 300 g/cm³ and more preferably higher than 500 g/cm³.

In particular, the polymeric waste material feedstock may be in the form of pellets, such as those having a particle size from 1 to 20 mm, preferably from 2 to 10 mm, and more preferably from 2 to 8 mm, or in form of shredded flakes and/or small pieces of film, preferably having a particle size from 1 to 100 mm. In the context of the present disclosure, having a particles size in a defined range means that 90 wt.% of the particles have a particle size which is in the defined range. The particle size may be determined by sieving or by using a Beckman Coulters LS13320 laser diffraction particle size analyzer.

The sorted APW can optionally be extruded prior to being employed as feedstock in the process of the present disclosure. In preferred embodiments, the sorted APW is pelletized, and the pellets are employed as feedstock in the process of the present disclosure.

### Depolymerization process and reactor

The depolymerization can be carried out either in the presence or in the absence of a catalyst and occurs at temperature ranging from 300 to 550°C and more preferably from 350 to 500°C.

In its essential aspects, the sorted and treated APW, and optionally the catalyst, are introduced into the depolymerization unit and then heated to the above mentioned temperature to achieve depolymerization. The gaseous fractions generated during depolymerization are discharged and conveyed to the condensation unit from which a liquid stream and a gaseous stream are obtained. Any solid residue of the depolymerization is discharged via the solid discharge unit.

The obtained liquid depolymerization product may be further separated. Therefore, the process of the present disclosure may further comprise a step of distilling the liquid depolymerization product.

The process of the present disclosure may yield a depolymerization product with a high gaseous content. In particular, the gaseous content in the depolymerization product can range from 20 to 60% based on the combined weight of the gaseous and liquid depolymerization product.

The gaseous fraction of the depolymerization product, particularly when a depolymerization catalyst is used, is preferably endowed with a high content of monomeric olefinic C₂-C₄-compounds which are especially useful for further processing, e.g. for the production of polymers. Due to the high amount of such compounds generated during depolymerization, the gaseous depolymerization product may be directly used as feedstock in cracking processes and subsequent polymerization. The gaseous product comprising light olefins and light alkanes can, for example be transferred to a downstream cracker by passing the ovens to produce polymerization grade monomer streams. Other side products such as ethane, propane and butanes will be cracked in the oven. The usually required steps of treating the product obtained after depolymerization to obtain the desired monomers can thus be bypassed, saving valuable energy and reducing CO₂ output.

The depolymerization process according to the present disclosure can be carried out in a reactor comprising: (a) feeding devices for introducing polymeric waste material and catalyst into the reactor; (b) a pyrolysis device equipped with heating units, gas discharge units and a solid discharge unit; and (c) a condensation device.

In a preferred embodiment, the reactor may comprise more than one pyrolysis unit.

In principle any type of reactors used for pyrolysis can be used. It can be for example an agitated vessel with rotating blades or, preferably, a horizontal reactor a screw equipped with a screw for homogenously mixing the polymeric waste material in the pyrolysis device throughout the depolymerization. The residence time of the solids in the pyrolysis device could be well-defined by adjusting the rotational speed of the screw.

In such a reactor, the gas discharge units are distributed throughout the pyrolysis device and are provided with an outlet to discharge the gaseous fraction of the depolymerization and an inlet for introducing cleaning gas into the pyrolysis device.

Preferably, the gas discharge units are equipped with filter membrane to avoid solids to be present in the gaseous fractions after being discharged from the pyrolysis device. The gas discharge units are preferably made of metallic or ceramic grain or fiber materials.

In a preferred embodiment, the condensation device comprises several condensers which are preferably operated at different temperatures. The temperatures of the condensers may be set according to the boiling points of the condensates.

### Depolymerization Catalyst

Although the depolymerization process of the present disclosure can work with pure thermal depolymerization, employing a depolymerization catalyst is a preferred embodiment.

According to the present disclosure, the catalyst can be selected from those active as depolymerization/cracking catalysts in thermocatalytic processes. In particular, it can be selected from metal oxides, heteropolyacids, mesoporous silica, aluminosilicates catalysts, such as halloysite and kaolinite, and preferably from zeolites. Among them, particularly preferred zeolites are synthetic Y-type zeolite and ZSM-5.

One preferred specific type of catalyst comprises as the active component an acidic compound deposited on a particulate non-porous support with the aid of a coating agent.

This catalyst, in addition to being highly effective in the depolymerization, was found to be easily separable from any solid residue of the depolymerization process, thus allowing for multiple use.

The above mentioned catalyst is preferably in particulate form. Preference is given to particulate non-porous support selected from the group consisting of sand, glass beads and metal particles. The particulate non-porous support may have any shape such as spherical, cylindrical or any non-homogenous shape. Apart from being particulate, the support employed in the catalyst of the present invention is also non-porous. Non-porous within the meaning of the present disclosure is to be understood as being not permeable to gases, such as air, or liquids such as water. The support, in order to make the catalyst of the present disclosure particularly designed to be mixed with the polymeric waste material undergoing depolymerization, has preferably an average particle size D50 of 0.2 to 20 mm, preferably 0.5 to 10 mm, more preferably 1 to 8, most preferably from 1 to 6 mm determined according to sieve analysis in accordance with ISO 3310-1 / ASTM E11. The test sieve apparatus of Retsch with woven wire mesh sieves (Ø 125 mm - 20 µm) is an example of usable sieving device.

Sand is a preferred type of non-porous particulate support.

The acidic compound of the catalyst of the present disclosure is preferably selected from the group consisting of Al/Si mixed oxides, Al₂O₃, aluminosilicates, silica and zeolites. Al/Si mixed oxides, which are particularly preferred in the present disclosure, refer to a material comprising a mixture of Al₂O₃ and SiO₂, having a neutral structure.

Zeolites as referred to in the present disclosure are understood to be crystalline microporous aluminosilicates which are built up from corner-sharing SiO₄- and AlO₄- tetrahedrons having the general structure Mₙ+x/n [AlO₂]-x(SiO₂)_{y}]+ zH₂O with n being the charge of the cation M, typically an alkaline or alkaline earth metal or hydrogen ion, preferably an ion selected from the group consisting of H⁺, Na⁺, Ca₂⁺, K⁺ and Mg₂⁺, and z defining the number of water molecules incorporated into the crystal structure. Zeolites differ from mixed Al/Si oxides by their defined pore structure and ionic character. In particularly preferred embodiments, the zeolite employed as the acidic compound is selected from the group consisting of Zeolite Y, Zeolite Beta, Zeolite A, Zeolite X, Zeolite L and mixtures thereof, especially Zeolite Y and Zeolite Beta. The listed zeolites are well-known and commercially available. Particularly preferred are zeolites wherein the metal ion M is substituted by a hydrogen. Other specific examples for suitable zeolite-type components to be employed in the present disclosure include but are not limited to ZSM-5, ZSM-11, ZSM-22, ZSM-23, ZSM-35, ZSM-48, ZSM-50, TS-1, TS-2, SSZ-46, MCM-22, MCM-49, FU-9, PSH-3, ITQ-1, EU-1, NU-10, silicalite-1, silicalite-2, boralite-C, boralite-D, BCA, and mixtures thereof.

In particular preferred embodiments, the acidic compound is an Al/Si mixed oxide. The composition of the Al/Si mixed oxide employed as carrier may be adjusted according to need. However, especially favorable results of the depolymerization are achieved in cases where the acidic compound contains Al₂O₃ and SiO₂ in specific amounts. Therefore, in preferred embodiments, the acidic compound contains Al₂O₃ in an amount from 20 to 99 wt.%, preferably from 30 to 80 wt.%, and especially from 40 to 70 wt.%, based on the total weight of the acidic compound. Further, the acidic compound preferably contains SiO₂ in an amount from 1 to 80 wt.%, preferably from 20 to 70 wt.%, and especially from 30 to 60 wt.%, based on the total weight of the acidic compound.

The determination of the SiO₂ and Al₂O₃ content of the acidic compound can be carried out by atomic emission spectroscopy using an inductively coupled plasma (ICP-AES).

The coating agent employed in the catalyst of the present disclosure is preferably selected from the group consisting of oil, inorganic hydrogel or combinations thereof. As inorganic hydrogel, preference is given to silica hydrogel. With regard to oils employed as the coating agent, preference is given to aromatic-free white mineral oil, preferably based on iso-paraffins. In a preferred embodiment, the oil employed has a kinematic viscosity at 20°C of 140 to 180 mm²/s, preferably 150 to 170 mm2/s and/or a kinematic viscosity at 40°C of 40 to 80 mm2/s, preferably 50 to 70 mm2/s and/or a kinematic viscosity at 100°C of 5 to 15 mm2/s, preferably 7 to 10 mm2/s. The kinematic viscosity can be determined according to ISO 3104.

The preferred amount of coating agent ranges from 1 to 300% preferably from 2 to 150%wt, more preferably from 5 to 100%wt and most preferably 10-80%wt based on amount of acidic compound. For hydrogels, the amount to be employed is referred to the dry weight.

In a further preferred embodiment, the active compound is comprised in the catalyst of the present disclosure in an amount of 0.5 to 6 wt.%, preferably 2 to 4 wt.%, based on the total weight of the catalyst.

The above mentioned catalyst is preferably obtained by mixing the particulate non-porous support and the coating agent and then adding the acidic compound in the form of a powder to the obtained mixture. The mixture may be optionally heat treated to obtain the catalyst. The heat treatment may, for example, be carried out at a temperature of 100 to 600°C. In a preferred embodiment, the particulate non-porous support is subjected to a drying step before being mixed with the coating agent.

Particularly when component (c) is selected from hydrogel, the catalyst can be reactivated by heating thus allowing multiple uses and conserving resources. In a preferred embodiment, the catalyst is therefore reactivable by heat treatment.

### Depolymerization product

The gaseous fractions generated during pyrolysis are separated into liquid and gaseous depolymerization products, e.g. by condensation.

### Liquid depolymerization product

The obtained liquid depolymerization product may show a low content of aromatic compounds and in particular a low content of polycyclic aromatic compounds and asphaltanes. The liquid depolymerization product obtained by the process of the present disclosure is accordingly characterized by a low content of aromatic and olefinic components as well as a high degree of purity.

Preferably, the content of aromatic compounds in the obtained liquid depolymerization product is less than 10 mol%, preferably less than 5 mol%, and in particular no more than 3 mol%, the content of aromatic components being measured as contents of aromatic protons in mol% as determined by 1H-NMR -spectroscopy.

Further, the liquid depolymerization product obtained by the depolymerization process of the present disclosure is characterized by a low content of olefinic compounds. The content of olefinic compounds in the liquid depolymerization product is preferably less than 7 mol%, more preferably less than 5 mol%, even more preferably less than 3 mol%, based on the total number of hydrocarbon protons; the content of olefinic compounds being determined based on the contents of olefinic protons as determined by 1H-NMR -spectroscopy.

Another measure for the content of double bonds in a given sample is the Bromine number (BrNo.) which indicates the degree of unsaturation. In preferred embodiments, the liquid depolymerization product obtained by the process of the present disclosure has a Bromine number, expressed as gram bromine per 100 grams of sample, of less than 150, preferably from 10 to 100, more preferably from 15 to 80, even more preferably from 20 to 70 and in particular from 25 to 100, determined according to ASTM D1159-01.

The liquid depolymerization product obtained in the process of the present disclosure has preferably a boiling range from 30 to 650°C, more preferably from 50 to 250°C. By separation techniques such as distillation, the depolymerization product may be separated into hydrocarbon fractionations of different boiling ranges, for example a light naphtha fraction mainly containing C₅ and C₆ hydrocarbons having a boiling range from 30°C and 130°C, a heavy naphtha fraction mainly containing C₆ to C₁₂ hydrocarbons having a boiling range from 130°C to 220°C, a kerosene fraction mainly containing C₉ to C₁₇ hydrocarbons having a boiling range from 220°C to 270°C or into other high boiling point fractions such as diesel fuel, fuel oil or hydrowax.

Preferably, the liquid depolymerization product contains little to no solid residue. In preferred embodiments, the content of residues of the liquid depolymerization product upon evaporation, determined according to ASTM D381, is no more than 5 ppm (w).

### Gaseous depolymerization product

The gaseous depolymerization product obtained may show a low content of low molecular hydrocarbons such as methane or ethane. Conversely, it is preferred to have higher amounts of olefins such as ethylene, propylene, and butenes which are commonly desired for polyolefin production. Accordingly, the gaseous depolymerization product obtained by the process of the present disclosure is characterized by a high content of any of ethylene, propylene, and butenes and/or a low content of saturated low molecular hydrocarbons, in particular hydrocarbons of the general formula CₙH₂ₙ₊₂ wherein n is a real number ranging from 1 to 4.

In a preferred embodiment, the gaseous depolymerization product of the process of the present disclosure is therefore characterized by a content of methane of at most 6 wt.%, preferably at most 4 wt.%, more preferably at most 3 wt.%, most preferably at most 2 wt.%, especially at most 0.5-1.5 wt.%, based on the total weight of the gaseous depolymerization product after step (e) of the process of the present disclosure.

Preferably, the gaseous depolymerization product obtained by the process of the present disclosure contained a high amount of low molecular olefinic compounds, especially of the CₙH₂ₙ variety with n = 2-4. The gaseous fraction could thus be directly used as feedstock for further processing in a cracker downstream, e.g. a raw gas compressor to obtain purified monomer streams, and thereafter for the subsequent production of polymers, allowing bypassing the highly energy consuming stream cracking ovens usually required while at the same time reducing the output of CO₂. In a preferred embodiment, the gaseous depolymerization product of the process of the present disclosure is therefore characterized by a content of compounds of the general formula CₙH₂ₙ (olefins) with n = 2-4 of at least 50 wt.%, preferably at least 60 wt.%, more preferably at least 65 wt.%, most preferably at least 70 wt.%, especially at least 75 wt.%, based on the total weight of the gaseous depolymerization product after step (e) of the process of the present disclosure.

The gaseous depolymerization product may contain small quantities of HCl, HCN, H₂S, H₂O, NH₃, COS etc. which can be optionally separated in a refining step before the introduction to the steam cracker downstream segments.

As explained the depolymerization process of the present disclosure lead to a liquid depolymerization product with low contaminants, which is suitable to be used as Steam Cracker feed or fuel.

In particular, the step of sorting of the post-consumer automotive waste allows:
- Lowering the contaminants for improving catalyst efficiency;
- Obtaining a high product quality product, having low contaminants content (N, S, Cl, metals) for direct use as steam cracker feed and/or clean fuel;
- Enabling a higher portion of material to be recycled as metals, as engineering plastics PCR for mechanical recycling;
- Obtaining high yield light olefin rich gaseous products;
- Obtaining a low residue/char side product from depolymerization;
- Easy recovering of fillers from residue to recycled material.

The present disclosure will be explained in more detail with reference to the figures and the examples provided below.

### EXAMPLES

The following analytical methods were employed:
1) GC MS was used for liquid and gas analysis.
2) Char residue was determined according to mass balance after decoking the residues of the reactor at 800 °C.
3) Liquid contents were characterized using simulated distillation (SimDist) analysis according to ASTM D 7213 : 2012. Final boiling point (FBP), boiling temperature at 50% and initial boiling point (IBP) are taken from SimDist.
4) The total content of unsaturated components in the liquid condensates were characterized via Bromine number determination using a 848 Titrino Plus (Metrohm AG, Herisau, Switzerland) equipped with an double PT-wire electrode which has integrated a PT1000 temperature sensor, and a 10 ml buret in accordance with ASTM D1159-01 as described in Metrohm Application Bulletin 177/5e, December 2018. The Bromine number (BrNo.) represents the amount of bromine in grams absorbed by 100 grams of a sample.
5) 1H-NMR analysis was conducted by dissolving a sample of the liquid condensate in CDCl3 and characterizing the sample using proton NMR spectroscopy. Aromatic, olefinic and aliphatic protons were assigned according to the chemical shifts summarized in Table 1:

**Table 1 - Integral Regions in 1H-NMR spectroscopy**

| Peak Assignment | 1H Chemical Shift (ppm) |
|---|---|
| I₁ (Aromatic Protons) | 8.25 - 7.27 |
| CDCl₃ -Solvent | 7.26 |
| I₂ (Aromatic Protons) | 7.25 - 6.60 |
| I₃ (Olefinic Protons - Type 2 ) | 6.60 - 5.95 |
| I₄ (Olefinic Protons - Type 1 ) | 5.95 - 5.67 |
| I₅ (Olefinic Protons - Type 2 ) | 5.67 - 5.35 |
| I₆ (Olefinic Protons - Type 3 ) | 5.35 - 5.15 |
| I₇ (Olefinic Protons - Type 1 ) | 5.15 -4.85 |
| I₈ (Olefinic Protons - Type 4 ) | 4.85 - 4.40 |
| I₉... (Paraffinic Protons) | 4.40 - 0.25 |

The listed types of olefinic protons are assumed to correspond to the following structures:

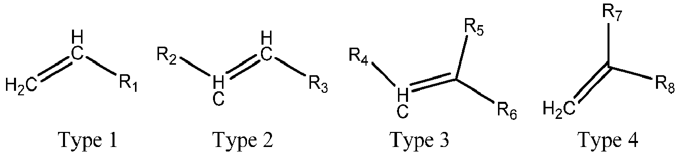

The amount of aromatic, olefinic and aliphatic protons may be determined based on the assigned peak integrals according to the following equations:
Mol% Aromatic Protons = [(I₁ + I₂) / (I₁ + I₂ + I₃ + I₄ + I₅ + I₆ + I₇+ I₈ + I₉)] %
Mol% Olefinic Protons Type 1 = [(I₄ + I₇) / (I₁ + I₂ + I₃ + I₄ + I₅ + I₆ + I₇+ I₈ + I₉)] %
Mol % Olefinic Protons Type 2 = [(I₃ + I₅) / (I₁ + I₂ + I₃ + I₄ + I₅ + I₆ + I₇+ I₈ + I₉)] %
Mol % Olefinic Protons Type 3 = [(I₆) / (I₁ + I₂ + I₃ + I₄ + I₅ + I₆ + I₇+ I₈ + I₉)] %
Mol % Olefinic Protons Type 4 = [(I₈) / (I₁ + I₂ + I₃ + I₄ + I₅ + I₆ + I₇+ I₈ + I₉)] %
Mol% Paraffinic Protons = [(I₉) / (I₁ + I₂ + I₃ + I₄ + I₅ + I₆ + I₇+ I₈ + I₉)] %

6) The water content of the catalyst was determined using a Sartorius MA45 (Sartorius AG, Goettingen, Germany) on a sample of 0.5 to 1 g at 180 °C.

7) For the determination of a pH value of the hydrodepolymerization products, by extraction of a liquid sample of the hydrodepolymerization product was extracted with water in a volume ratio water: sample of 1:5 and the pH value of the aqueous solution was measured.

8) Particle size distribution of the particulate non-porous support and the catalyst were determined according to Coulter counter analysis in accordance with ASTM D4438.

9) Properties of the employed organic waste material feedstock were determined as follows:
As the composition of the organic waste material may vary, samples from 20 to 100 g of the polymeric waste were milled and analyzed. Alternatively, a pelletized sample of the polymeric waste was analyzed. The following methods are used:
i) Total Volatiles (TV) were measured as the weight loss of a 10 g sample at 100 °C and after 2 hours at 200 mbar.
ii) Water content was determined by Karl-Fischer titration using an apparatus from Metrohm 915 KF Ti-Touch equipped with a PT100 indicator electrode for volumetric KF titration according to Metrohm Application Bulletin 77/3e in compliance with ASTM E203.
iii) IR-Spectroscopy was used for a qualitative identification of various polymers (PP, PE, PS, PA, PET, PU, Polyester) and additives such as CaCO₃.
iv) Standard elemental analysis was used for determination of wt.% of H, C, N (DIN 51732: 2014-07) and S (tube furnace, ELTRA GmbH, Haan, Germany, DIN 51724-3: 2012-07).
v) 1H-NMR was used for determining the composition of polymers soluble in solvents adequate for recording a 1H-NMR spectrum: PE/PP balance (copolymers are also included), PET, PS.
vi) Ash Content analysis of plastics was determined at 800 °C according to DIN EN ISO 3451-1 (2019-05).
vii) Bulk density of the polymer waste was determined according to DIN 53466.
viii) Corrosivity was determined as the pH value of an aqueous solution after a contact time of 3 h (5 g sample in 50 ml distilled water)
ix) Inductively coupled plasma atomic emission spectroscopy (ICP-AES) was used for quantitative element determination (total chlorine content, content of Si or metals)
x) The ash content of a liquid feedstock such as pyrolysis oil, is measured according to ASTM D482-19.

### Catalyst 1

The catalyst was prepared as follows:
25.0 kg of sand were placed into a 60 L steel barrel with screw cap and equipped with a Teflon inlay. 500 ml water were added (corresponding to 2.0 wt% with respect to sand) and the drum was placed on a Drum Hoop Mixer and rotated for 1 hour (about 100 rpm). 24.5 kg of the obtained mixture was placed in another drum and 1000 g of a 1:1 milled free-flowing mixture of silica hydrogel and Zeolite Beta as the acidic compound (corresponding to a 2 wt% loading) and were added. The drum was placed on a drum hoop mixer and rotated for 1 hour (about 100 rpm). At the end of the mixing process a free-flowing catalyst was obtained with an even distribution of the particles of the acidic compound on the surface of the sand particles. The obtained mixture was dried at 120 °C vacuum for 6 h.

The silica hydrogel was prepared according to EP1290042, example 1. The solid content of the hydrogel sample was 20 wt%. The D50 of the milled mixture of silica hydrogel and acidic components were between 80-100 µm, in accordance with ASTM D4438.

The sand used had a particle size distribution as summarized in Table 1 below with 99% of the particles being smaller than 3 mm. Prior to use in formation of the catalyst, the sand was pre-dried at 80 °C for 24 h in a drying oven with circulating air.

**Table 1: Particle size distribution**

| | Sand, wt.% |
|---|---|
| >1400µm | 40.55% |
| >1400µm - >1000µm | 55.30% |
| < 1000µm | 4.15% |

Zeolyst Beta (CP811E-75) commercially available from PQ Corporation, Malvern, PA, USA

### Catalyst 2

The catalyst was prepared adopting the same procedure described for Catalyst 1 with the difference that silica hydrogel as a coating agent was not used.

### Feedstock:

The following APW containing materials were obtained as feedstocks:

### Comparative Feedstock A

End of use cars were shredded in scrap car recycling plant. The majority of metals (density >2.5 g/cm³) was separated by magnetic and/or density separation to obtain a plastic-rich fraction (density < 2,0 g/cm³).

### Inventive Feedstock A1

End of use cars were shredded in scrap car recycling plant. A plastic-rich fraction with a density ≤ 1.06 g/cm³ was separated by density separation.

### Comparative Feedstock B

Mixed automotive plastic waste consisting of whole or largely intact components (unshredded, dismantled) for example from repair shops or scrap car recycling companies.

### Comparative Feedstock C

Mixed automotive plastic waste consisting of whole or largely intact components (unshredded, dismantled) for example from repair shops or scrap car recycling companies. Metal-containing parts (e.g. electronic parts) and cables were manually separated

### Inventive Feedstock B1-B2 and Comparative B3-B4

The sorting of the mixed automotive plastic waste from repair shops was based on typical applications of specific polymers and polymer composites for specific components.
- Colorless tanks (e.g. cooling water expansion tanks) with a density <1.0 g/cm³ were assigned to the polyethylene fraction. Black fuel tanks and black fuel hose with a density <1.0 g/cm³ were assigned the fraction of halogenated materials;
- Unpainted exterior parts (e.g. wheel house liners, wheel arch, and bumper guide rails) with a dimension along one axis of>10 cm and density <1.06 g/cm³ were assigned to the PP talc and mineral filled fraction. Unpainted exterior parts (e.g. wheel house liners, wheel arch, and bumper guide rails) with a dimension along one axis of >10 cm and density of 1.06-1.3 g/cm³ were assigned to the ASA, ABS, PC/ABS, POM fraction after a manual separation of polyamide parts, which were assigned to the PA fraction according to the material stamp on the parts;
- Engine covers with a dimension along one axis of>10 cm and density of 1.06-1.3 g/cm³ were assigned to PA fraction;
- Painted exterior parts (e.g. grilles, door panels, bumpers) with a dimension along one axis of >10 cm and a density <1.06 g/cm³ were assigned to the PP talc and mineral filled fraction. Painted exterior parts (e.g. grilles, door panels, bumpers) with a dimension along one axis of >10 cm and a density of 1.06 - 1.3 g/cm³ were assigned to the ASA, ABS, PC/ABS, POM fraction after a manual separation of polyamid parts, which were assigned to the PA fraction according to the material stamp on the parts;
- Flat unpainted exterior parts with a dimension along two spatial axes of >30 cm each (e.g. underbody protection for engines) and a density of 1.04 - 1.13 g/cm³ were assigned to the polypropylene glass fiber fraction;
- Unpainted interior parts (e.g. instrument panel carrier, covers) with a dimension along one axis of >10 cm and density <1.06 g/cm³ were assigned to the PP talc and mineral filled fraction. Interior parts with a backfoamed surface (e.g. dashboards) that have a Shore hardness of the backfoamed surface < 50 (Shore D), a dimension along one axis of>10 cm, and density of 0.9-1.06 g/cm³ were assigned to the halogenated polymers and electronic fraction;
- Components with a density >2.0 g/cm³ were assigned to the metal-rich parts fraction. Electronic parts, cables and electric insulations with a density of 1.3 - 2.0 g/cm³ were assigned to the halogenated polymers, electronic fraction;
- Interior parts with a dimension along one axis of>10 cm and a density of 1,06 - 1.3 g/cm³ were assigned to the ASA, ABS, PC/ABS, POM fraction after a manual separation of polyamide parts, which were assigned to the PA fraction according to the material stamp on the parts;
- Completely foamed and woven parts with a density < 0.88 g/cm³ and rubber seals were assigned to the unknown fraction.

The filler content of the PP talc and mineral filled fraction and the PP glass fiber fraction separated as described above was determined based on the material density (polypropylene 0.91 g/cm³; talc 2.6 g/cm³, glass fibers 2,5 g/cm³).

The properties of the feedstocks averaged on analysis of three samples are summarized in Table 2.

**Table 2**

| | A | A1 | B | B1 | B2 | B3 | B4 | C |
|---|---|---|---|---|---|---|---|---|
| | [kg] | [kg] | [kg] | [kg] | [kg] | [kg] | [kg] | [kg] |
| Total mass of sample | 101.5 | 41.9 | 77.5 | 39.0 | 49.0 | 6.5 | 8.5 | 65.5 |
| PP (unfilled and mineral filled) | 36.3 | 35.1 | 37.5 | 37.5 | 37.5 | 0.0 | 0.0 | 36.0 |
| thereof talc | 6.5 | 6.0 | 6.4 | 6.4 | 6.4 | 0.0 | 0.0 | 6.2 |
| PP glass fiber reinforced | 4.1 | 3.8 | 10.0 | 0.0 | 10.0 | 0.0 | 0.0 | 5.2 |
| thereof glass fibers | 1.0 | 0.8 | 2.4 | 0.0 | 2.4 | 0.0 | 0.0 | 2.2 |
| PE | 2.2 | 2.2 | 1.5 | 1.5 | 1.5 | 0.0 | 0.0 | 1.6 |
| PC/PET, POM, ASA, ABS, PC/ABS | 4.6 | 0.0 | 6.5 | 0.0 | 0.0 | 6.5 | 0.0 | 11.9 |
| PA | 13.5 | 0.8 | 3.0 | 0.0 | 0.0 | 0.0 | 0.0 | 5.6 |
| halogenated polymers, electronic | 13.3 | 0.0 | 8.5 | 0.0 | 0.0 | 0.0 | 8.5 | 1.2 |
| metals-rich parts | 14.2 | 0.0 | 6.5 | 0.0 | 0.0 | 0.0 | 0.0 | 0.0 |
| unknown | 13.3 | 0.0 | 4.0 | 0.0 | 0.0 | 0.0 | 0.0 | 4.0 |
| Sum mass of polyolefinic compounds incl.filler | 42.6 | 41.1 | 49.0 | 39.0 | 49.0 | 0.0 | 0.0 | 42.8 |
| Sum mass of polyolefinic compounds w/o filler | 35.1 | 34.3 | 40.2 | 32.6 | 40.2 | 0.0 | 0.0 | 34.4 |
| Wt% polyolefinic compounds | 34.6% | 81.9% | 51.9% | 83.6% | 82.0% | 0.0 | 0.0% | 52.5% |

The feedstock and catalyst were introduced into a reactor device equipped with heating units, gas discharge units, solid discharge unit; a condensation device and a screw for homogenously mixing the reactor content during depolymerization. Conditions of the depolymerization conducted are summarized in Table 3. The obtained gaseous fractions were further separated into liquid and gaseous depolymerization products by condensation. The amounts of the obtained fractions are also given in Table 3.

**Table 3: Process parameter and mass balance**

| Run# | Temp °C | Time (min) | Cat# | Feedstock | %Liquid | %H₂O | %Gas | % Residue | % loss |
|---|---|---|---|---|---|---|---|---|---|
| Comp.1 | 450 | 30 | none | C | 46.6 | 2.0 | 16.5 | 25.8 | 9.1 |
| Comp. 2 | 450 | 30 | none | A | 28.7 | 1,7 | 19.8 | 49.0 | 2.0 |
| IE 3 | 450 | 30 | none | **A1** | 42.4 | 0.8 | 21.5 | 34.3 | 2.0 |
| Comp. 4 | 450 | 30 | 1 | C | 43.6 | 2.0 | 19.5 | 29.8 | 5.1 |
| Comp.5 | 450 | 30 | 1 | B | 45.4 | 0.5 | 23.5 | 30.3 | 0.3 |
| IE 6 | 450 | 30 | 1 | B1 | 31.3 | 0.9 | 55 | 15 | 2.3 |
| Comp.7 | 450 | 30 | none | B | 43.4 | 0.6 | 22.2 | 33.0 | 0.8 |
| IE 8 | 450 | 30 | none | B1 | 50.6 | 0.2 | 23.9 | 31.9 | -6.6 |
| Comp.9 | 450 | 30 | 1 | B3 | 40.8 | 1.5 | 4.5 | 51.1 | 2.1 |
| Comp. 10 | 450 | 30 | 2 | B | 57.7 | 1.4 | 21.7 | 17.6 | 1.6 |

With reference to the results of table 3 it can be observed that inventive runs show a high amount of liquid+gas depolymerization product and a lower amount of residue with respect to run made with a different feedstock under the same conditions.

The liquid depolymerization product from runs C1, C2 and C4 contains high amount of heteroatoms and halogens, which makes them not suitable as cracker feed.

The gaseous depolymerization products obtained were further analyzed. The results of the analysis are summarized in Table 4.

**Table 4 Analysis of the pyrolysis gas**

| Run | # | Comp. 5 | Comp. 9 | IE 6 | IE7 | Comp 10 |
|---|---|---|---|---|---|---|
| H2 | [wt%] | 1.1 | 0.1 | 0.3 | 0.3 | 0.7 |
| CO | [wt%] | 0.0 | 6.7 | 0.0 | 0.0 | 2.5 |
| CO₂ | [wt%] | 34.8 | 83.9 | 2.0 | 6.6 | 28.2 |
| CH₄ | [wt%] | 7.3 | 1.6 | 1.8 | 3.6 | 3.5 |
| C2H6 | [wt%] | 8.1 | 0.5 | 3.0 | 7.0 | 6.0 |
| C2H4 | [wt%] | 13.8 | 1.3 | 5.5 | 3.6 | 3.6 |
| C₃H₈ | [wt%] | 0.2 | 0.0 | 11.8 | 7.3 | 5.7 |
| C₃H₆ | [wt%] | 12.3 | 2.2 | 30.5 | 36.2 | 24.5 |
| Butanes | [wt%] | 15.4 | 1.1 | 23.2 | 18.4 | 11.1 |
| Butenes | [wt%] | 7.0 | 2.5 | 22.0 | 17.0 | 14.1 |

With reference to the results of Table 4 it can be observed that inventive runs 6-7 show the lowest amount of CO and CO₂, a low amount of CH₄ combined with the highest amount of higher alpha olefins such as propylene and butene as well as the saturated homologs propane and butanes.

## Claims

1. A process for the recycling of automotive plastic waste comprising:
(i) sorting the automotive plastic waste (APW) to obtain a plastic waste fraction containing at least 60%wt, of a mixture of polyethylene (PE) and polypropylene (PP);
(ii) shredding and/or pelletizing said fraction obtaining a plastic feedstock having a bulk density higher than 100 g/l;
(iii) depolymerizing said feedstock at 300-500°C, in the optional presence of a catalyst, thereby obtaining a gaseous depolymerization products and
(iv) collecting said gaseous depolymerization product and separating it into a liquid and a gaseous stream.

2. The process according to claim 1 in which the sorted APW fraction has a content of PE and PP higher than 70%wt.

3. The process according to any of the preceding claims in which, in the sorted APW, the cumulative amount of non-olefin polymers such as Polyamides(PA), polycarbonate (PC), polyethylene terephthalate (PET), acrylonitrile styrene acrylate (ASA) polyoxymethylene (POM), acrylonitrile butadiene styrene (ABS) and halogenated polymers is lower than 5%wt.

4. The process according to any of the preceding claims in which, in the sorted APW, the cumulative amount of non-olefin polymers is lower than 3%wt and preferably lower than 2%wt.

5. The process according to claim 1 in which step (i) is carried out via automatic separation technique.

6. The process according to claim 1 in which the APW feedstock originates from scrap of end of use cars.

7. The process according to claim 6 comprising a first sorting step by density producing a fraction having density lower than 2.0 g/cm³ followed by a further density separation step for isolating a polyolefin rich fraction having density lower than 1.06 g/cm³.

8. The process according to claim 1 in which the APW feedstock originates from repair shop parts and sorting is based on typical applications of specific polymers, density and polymer composition for specific components.

9. The process of claim 1 in which after step (ii) the sorted APW has a bulk density higher than 300 g/cm³ and more preferably higher than 500 g/cm³.

10. The process of claim 9 in which after step (ii) the sorted APW fraction has a particle size from 1 to 100 mm, preferably from 1 to 20 mm, and more preferably from 2 to 10 mm.

11. The process according to claim 1 in which the depolymerization stage (ii) is carried out in the presence of a catalyst.

12. The process according to claim 11 in which the catalyst comprises an acidic compound deposited on a particulate non-porous support with the aid of a coating agent.

13. The process according to any of the preceding claims in which the gaseous depolymerization product has a content of compounds of the general formula CₙH₂ₙ with n = 2-4 of at least 50 wt.%.

14. The process according to any of the preceding claims in which the liquid depolymerization product has a content of residues upon evaporation, determined according to ASTM D381, of no more than 5 ppm (w).

15. A feedstock for a recycling process comprising a sorted automotive plastic waste fraction which comprises:
- at least 60%wt, of a mixture of polyethylene (PE) and polypropylene (PP);
- less than 5%wt of polymers deriving from monomers comprising heteroatoms (non-olefin polymers); and
- less than 1%wt of metals selected from iron, copper, aluminum, magnesium and chromium.
